# EUROPEAN PATENT SPECIFICATION

(11) **EP 4 152 894 B1**
(45) Date of publication and mention of the grant of the patent: **02.12.2026**
(21) Application number: 21804405.5
(22) Date of filing: 22.02.2021
(51) Int. Cl.: H05B 45/345, H05B 45/46, H05B 45/59, H05B 45/395

(54) **LINEAR SILICON-CONTROLLED DIMMING DRIVING APPARATUS FOR LED LAMP**
LINEARE SILICIUMGESTEUERTE DIMMUNGSANSTEUERUNGSVORRICHTUNG FÜR LED-LAMPE
APPAREIL DE COMMANDE DE GRADATION À COMMANDE DE SILICIUM LINÉAIRE POUR LAMPE À DEL

(30) Priority: 15.05.2020 CN 202020819869 U
(43) Date of publication of application: 22.03.2023
(73) Proprietor: Vertex Lighting And Electrical Co., Ltd., Foshan, Guangdong (CN)
(72) Inventor: WU, Liangju, Foshan, Guangdong 528000 (CN)
(74) Representative: Tahtadjiev, Konstantin
(86) International application number: PCT/CN2021/077158
(87) International publication number: WO 2021/227593

(56) References cited:
- WO-A1-2015/066566
- WO-A1-2020/073359
- CN-A- 101 521 971
- CN-A- 108 601 131
- CN-A- 110 831 280
- CN-A- 110 831 280
- CN-U- 205 793 482
- CN-U- 209 710 378
- US-A1- 2019 069 361
- US-A1- 2019 166 663

## Description

### BACKGROUND OF THE PRESENT INVENTION

### FIELD OF INVENTION

The invention relates to the technical field of LED lamps and driving devices, in particular to a linear silicon-controlled dimming driving apparatus and a lamp thereof.

### DESCRIPTION OF RELATED ARTS

The LED luminaire mainly includes a lamp board composed of multiple groups of LEDs and a driving part adapted thereto. At present, the driving part of most LED luminaires is a switching power supply type, especially the flyback switching power supply, which mainly includes a rectifier circuit, a power stage circuit and a control circuit. The power stage circuit includes switching tubes, such as triodes. The rectifier circuit receives the AC mains power, the current enters the power stage circuit after passing through the rectifier circuit, and the voltage is converted by the power stage circuit, wherein the control circuit controls the on-off of the main power switching tube in the power stage circuit, so as to realize the constant current drive LED to emit light. In addition, the power stage circuit of the flyback switching power supply includes the switching tubes and a transformer composed of primary and secondary sides. However, the transformer occupies a large space, which makes the design and arrangement difficult, and the cost of the device itself is high, which is not easy to be marketed.

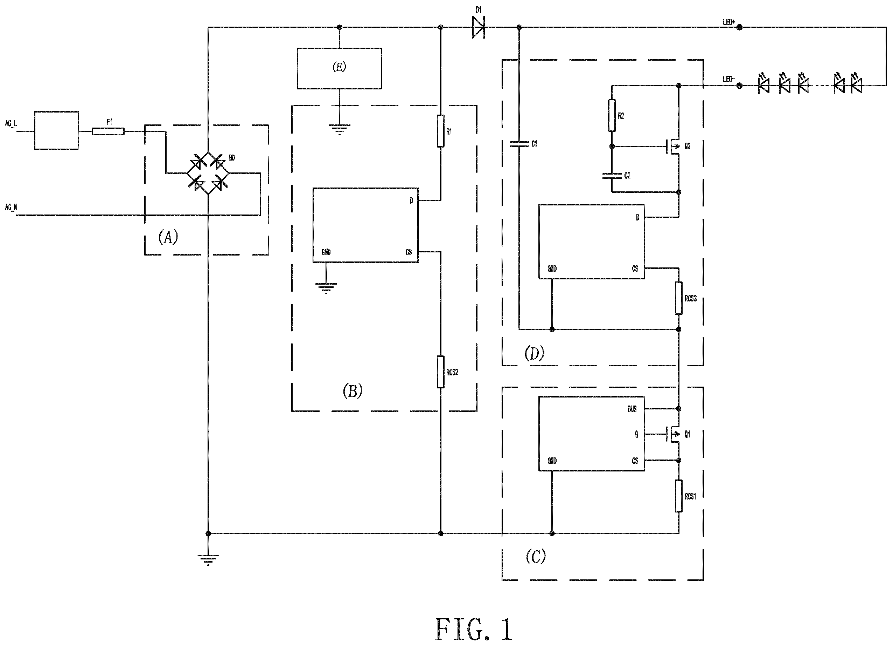

As shown in Fig. 1, another prior art adopts linear constant current drive, the driving part of the LED luminaire includes a rectifier circuit A, a thyristor dimming circuit B, a linear constant current circuit C and a load LED group, wherein the thyristor dimming circuit B and the linear constant current circuit C are respectively two independent and different functional module circuits. In this way, the rectifier circuit A receives power input, such as AC mains, and then the current passes through the dimming circuit B and/or the linear constant current circuit C, etc., thereby realizing constant current to drive the load LED group to emit light. Moreover, the thyristor dimming circuit B and the linear constant current circuit C are not susceptible to signal interference when they work independently, so that the compatibility and smoothness of dimming can be ensured, and its good linear adjustment rate can be ensured in a wide input voltage range. That is to say, the switch tube is controlled to work in the linear region and adjust the output current to keep the average output current constant.

The prior art can meet the requirements of functional stability to a certain extent. However, the hardware structure needs to add 1~2 linear constant current chip(s), the corresponding power switching tube(s), and other components on the partial circuit, which will consume power to a certain extent, resulting in a decrease in power conversion efficiency and power factor. In addition, while achieving high conversion efficiency and high power factor, the compatibility and smoothness of thyristor dimming will be sacrificed, resulting in the undesirable phenomenon of light flickering during the dimming process of the load LED group. Moreover, if additional functions are to be implemented, such as anti-flicker, low ripple, overvoltage protection, surge protection, etc., it is necessary to add corresponding circuit units on the above design basis, such as the anti-flash current stabilization circuit D, the filter unit circuit, the surge and overvoltage protection circuit E, etc. Therefore, it is easy to cause incomplete consideration in the overall design and increase the manufacturing cost of the entire circuit.

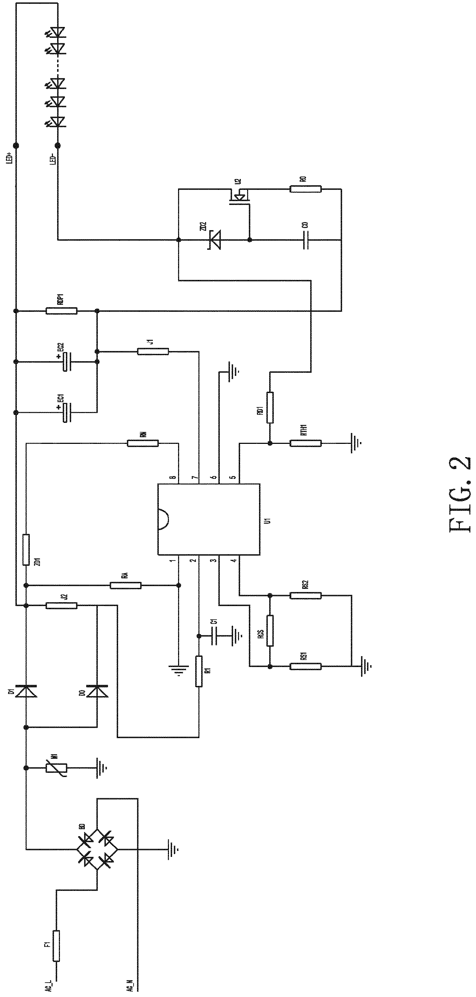

As shown in Fig. 2, another prior art adopts high-voltage linear control, the driving part of LED luminaire mainly includes a rectifier circuit, a high-voltage linear constant current dimming circuit, a filter circuit, a surge and overvoltage circuit, a de-strobe control circuit and a load LED group. In this conventional design, the high-voltage linear constant current dimming control unit can not only ensure dimming compatibility and smoothness, but also ensure a good linear adjustment rate within a wide input voltage range. Moreover, this technology is simpler than the technology shown in Fig. 1, wherein the number of components is reduced, thereby reducing the manufacturing cost to a certain extent.

Unfortunately, the prior art also has the following unavoidable drawbacks, or cannot well overcome the following common performance deficiencies at the same time: narrow input voltage range; low power conversion efficiency; poor linear adjustment rate; poor dimming compatibility; low power factor, etc. It is worth mentioning that the linear adjustment rate and power conversion efficiency are very important performance indicators. Therefore, it is very necessary to improve the linear adjustment rate and conversion efficiency of the output of the driving part of LED luminaires.

In addition, for the high-voltage linear power supply of LED luminaires, due to the need to consider the size of the power supply, SMD chip varistor components must be used to resist the surge during switching power supply. It can be understood by those skilled in the art that the surge here refers to the instantaneous overvoltage exceeding the normal working voltage. In essence, the surge is a violent pulse that occurs in only a few millionths of a second. Currently, the varistor components with the largest parameter specifications can only resist the surge voltage within 2000V at most.

However, this prior art adopts more common conventional design methods. The varistor component with the function of surge protection is arranged and connected behind the rectifier circuit located at the front end of the power input end, and the varistor (M1) is connected with the front of the high-voltage linear constant current dimming circuit located in the main circuit part. That is, the varistor (M1) is usually set in parallel with the two output terminals of the bridge stack (BD). This can only play the role of the varistor (M1) in resisting surge high voltage within 2000V, but it is powerless for applications that require surge high voltage protection of 2500V or more. For applications that need to withstand higher surge voltages of 2500V or more, a circuit that only relies on a single component as a surge and overvoltage protection unit cannot meet the conditions for achieving this function. Under conventional thinking, it is usually necessary to set two or more varistors (M1), or use a suppressor diode component with a larger volume capacity, or use multiple capacitors in parallel to solve the above problems. However, no matter which method, the circuit volume will be increased, the original volume advantage will be lost, and the cost of components will be additionally increased. Also, due to the addition of extra components in the circuit, the conversion efficiency of the power supply will also be adversely affected.

US2019/166663A1 has disclosed a current holding circuit for a bidirectional triode thyristor (TRIAC) dimmer and a linear dimming driving circuit. The current holding circuit for a TRIAC dimmer is a resistance and capacitance (RC) circuit including a first resistor and a first capacitor connected in series. The RC circuit is connected in parallel with any one of rectifying diodes of a rectifying bridge in the linear dimming driving circuit. The linear dimming driving circuit includes an overcurrent protecting circuit, a rectifying bridge including four rectifying diodes connected, the RC circuit, a surge suppressing circuit configured to absorb a high surge voltage of an input voltage, a filtering circuit, a linear constant-current circuit, and a flicker eliminating circuit configured to eliminate flicker caused by an asymmetrical current of a light emitting diode (LED) load due to the RC circuit.

WO2020/073359 has disclosed dimmable, color adjustable and flicker-free downlight circuit comprising: a rectifier module, used for providing an input voltage; multiple LED modules, an input end of each LED module being connected to an output end of the rectifier module, and each LED module comprising an LED lamp group and a color temperature selecting switch which are connected in series; a constant current control module, connected to the output ends of the LED modules and used for implementing constant current control on the LED modules; a TRIAC dimming module, connected to two ends of the rectifier module and used for implementing dimming control on the LED modules. In the design of the dimmable, color adjustable, and flicker-free downlight circuit, a linear drive frame is used for implementing dimming, constant current control, and ripple removing control, merely fewer devices are required, the volume of the system is greatly reduced, integration is implemented, the problem of compatibility between LED drive and TRIAC is solved, the costs are greatly reduced, and the requirements of clients for different color temperatures are satisfied using the same lamp.

Therefore, the present invention can not only achieve a high-voltage surge protection function of more than 2500V, but also achieve excellent linear regulation rate and power conversion efficiency performance, and also ensure the LED drive part of the component structure cost, which will further contribute to the improvement of the overall safety and reliability of LED lighting products.

### SUMMARY OF THE PRESENT INVENTION

The invention is set out in the appended set of claims 1-7.

The main advantage of the present invention is to provide a linear silicon-controlled dimming driving apparatus for LED lamp, which adopts an integral structural design, realizes various electrical functions, and at the same time improves the key driving performance, such as improving the linear adjustment rate and power conversion efficiency.

Another advantage of the present invention is to provide a linear silicon-controlled dimming driving apparatus for LED lamp, which adopts a linear constant-current driving method, has good thyristor dimming compatibility and smoothness, and has a long service life.

Another advantage of the present invention is to provide a linear silicon-controlled dimming driving apparatus for LED lamp, which comprehensively carries out overall structural planning, has a small volume advantage, and is suitable for various application occasions and installation environments.

Another advantage of the present invention is to provide a linear silicon-controlled dimming driving apparatus for LED lamp, wherein the linear silicon-controlled dimming driving apparatus includes a linear constant-current unit, a filter unit and a strobe-removal control unit for an output load unit to adjust the current to adjust the brightness of the light, when an external switch is adjusted to the minimum current output gear according to the demand, it can still ensure the stable output of constant current to the output load unit, so as to ensure the smooth dimming effect during the operation process, and there will be no undesirable phenomena such as light flickering, breathing flickering or failure to start.

Another advantage of the present invention is to provide a linear silicon-controlled dimming driving apparatus for LED lamp, wherein there is no need to add multiple varistors, or use suppressor diode components with larger volume capacity, or use multiple capacitors in parallel to resist higher surge voltages, such as surge voltages of 2500V or more.

Another advantage of the present invention is to provide a linear silicon-controlled dimming driving apparatus for LED lamp, which can take into account the performance of linear adjustment rate, surge overvoltage protection, short circuit protection and other aspects without adding additional electronic components.

Another advantage of the present invention is to provide a linear silicon-controlled dimming driving apparatus for LED lamp, which is suitable for the driving requirements of multi-chromaticity dimming, and is practical for the dimming requirements of both cool white temperature LEDs and warm white temperature LEDs.

Another advantage of the present invention is to provide a linear silicon-controlled dimming driving apparatus for LED lamp, which can achieve the actual effect of eliminating stroboscopic and low ripple.

Another advantage of the present invention is to provide a linear silicon-controlled dimming driving apparatus for LED lamp, wherein the temperature of the base board is fed back to prevent the temperature of the entire linear silicon-controlled dimming driving apparatus from being too high, that is, the overheating protection function, which further improves the service life of the LED lamps.

Another advantage of the present invention is to provide a linear silicon-controlled dimming driving apparatus for LED lamp, which uses a small number of electronic components to ensure that the manufacturing cost does not increase.

Other advantages and features of the invention will be fully realized from the following detailed description and may be realized by means of the instrumentalities and combinations particularly pointed out in the appended claims.

According to one aspect of the present invention, a linear silicon-controlled dimming driving apparatus for LED lamp of the present invention that can achieve the foregoing object and other objects and advantages, comprising:
a rectifier unit, a linear constant-current unit, a filter unit and a strobe-removal control unit arranged thereon, such that an output load unit receives electric energy from an external power source at a front end and is then driven after the electric energy passes through the rectifier unit, the linear constant-current unit, the filter unit and the strobe-removal control unit, wherein the output load unit is connected with a rear end of the strobe-removal control unit, wherein the linear constant-current unit further comprises a main control chip and a protective unit arranged thereon, wherein the linear constant-current unit is arranged as a main body, wherein the linear constant-current unit is connected with a rear end of the rectifier unit, wherein the strobe-removal control unit and the filter unit are respectively connected with the linear constant-current unit.

According to an embodiment of the present invention, the filter unit is cooperatively connected with the protective unit of the linear constant-current unit.

According to an embodiment of the present invention, the main control chip is a high-voltage linear constant-current dimming control chip whose internal package has a built-in high-voltage MOS tube, wherein a TRIAC detection port of the main control chip is connected with the rear end of the rectifier unit through a current detection resistor, so that the brightness of the output load unit is adjusted through adjusting the current, wherein the protective unit is connected with the filter unit and is connected with the main control chip, so that the linear silicon-controlled dimming driving apparatus as a whole is allowed to resist a higher surge voltage.

According to an embodiment of the present invention, the protective unit is connected with a linear constant current MOS drain port of the main control chip of the linear constant-current unit, so as to be connected in series with the built-in high-voltage MOS tube of the main control chip.

According to an embodiment of the present invention, the linear silicon-controlled dimming driving apparatus further comprises a strobe-removal control chip of the strobe-removal control unit further has a soft-start function, so that the current gradually changes from a small value to a maximum value, so as to achieve a natural transition from dark to bright within a few seconds of starting the output load unit.

According to an embodiment of the present invention, the rectifier unit further comprises a bridge diode arranged thereon, wherein the filter unit further comprises at least one electrolytic capacitor arranged thereon, wherein the strobe-removal control unit further comprises a strobe-removal control chip arranged thereon, wherein the protective unit comprises a varistor arranged thereon.

According to an embodiment of the present invention, the linear constant-current unit further comprises an overheating protective unit connected with the main control chip, and is directly arranged on a base board for feedback on the temperature of the base board.

According to an embodiment of the present invention, the output load unit is implemented as an LED light group composed of a plurality of LEDs.

According to an embodiment of the present invention, the output load unit adopts an LED light group composed of cool white temperature LEDs and warm white temperature LEDs.

According to an embodiment of the present invention, the linear silicon-controlled dimming driving apparatus further comprises a chromaticity switch unit connected with a front end of the LED light group composed of cool white temperature LEDs and warm white temperature LEDs.

According to an embodiment of the present invention, the chromaticity switch unit is implemented as a multi-stage toggle switch or as a combined DIP switch.

Still further objects and advantages will become apparent from a consideration of the ensuing description and drawings.

These and other objectives, features, and advantages of the present invention will become apparent from the following detailed description, the accompanying drawings, and the appended claims.

### BRIEF DESCRIPTION OF THE DRAWINGS

FIG. 1 is a perspective view of the principle of the prior art.
FIG. 2 is a perspective view of the principle of another prior art adopting linear constant current dimming.
FIG. 3 is a principle block view of a linear silicon-controlled dimming driving apparatus for an LED lamp according to a first preferred embodiment of the present invention.
FIG. 4 is a circuit perspective view of a linear silicon-controlled dimming driving apparatus for an LED lamp according to the above first preferred embodiment of the present invention.
FIG. 5 is a principle block view of a linear silicon-controlled dimming driving apparatus for an LED lamp according to a second preferred embodiment of the present invention.
FIG. 6 is a circuit perspective view of a linear silicon-controlled dimming driving apparatus for an LED lamp according to the above second preferred embodiment of the present invention.
FIG. 7 is a principle block view of a linear silicon-controlled dimming driving apparatus for an LED lamp according to a third preferred embodiment of the present invention.
FIG. 8 is a circuit perspective view of a linear silicon-controlled dimming driving apparatus for an LED lamp according to the above third preferred embodiment of the present invention.
FIG. 9 is a principle block view of a linear silicon-controlled dimming driving apparatus for an LED lamp according to a fourth preferred embodiment of the present invention.
FIG. 10 is a circuit perspective view of a linear silicon-controlled dimming driving apparatus for an LED lamp according to the above fourth preferred embodiment of the present invention.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments , alternatives, modifications, equivalents, and applications without departing from the spirit and scope of the present invention.

Those skilled in the art should understand that, in the disclosure of the present invention, terminologies of "longitudinal," "lateral," "upper," "front," "back," "left," "right," "perpendicular," "horizontal," "top," "bottom," "inner," "outer," and etc. just indicate relations of direction or position are based on the relations of direction or position shown in the appended drawings, which is only to facilitate descriptions of the present invention and to simplify the descriptions, rather than to indicate or imply that the referred device or element must apply specific direction or to be operated or configured in specific direction. Therefore, the above-mentioned terminologies shall not be interpreted as confine to the present invention.

It is understandable that the term "a" should be understood as "at least one" or "one or more". In other words, in one embodiment, the number of an element can be one and in other embodiment the number of the element can be greater than one. The term "a" is not construed as a limitation of quantity.

The invention provides a linear silicon-controlled dimming driving apparatus, which is especially suitable for LED lamp. In other words, the LED lamp includes a power driver with dimmable brightness, which obtains electric energy from an external power supply 90 at an opposite front and transmits electric energy to an output load unit 50 at an opposite rear end. The external power source 90 is preferably 200-240V AC. In this preferred embodiment, the output load unit 50 is implemented as at least one high-voltage LED light group.

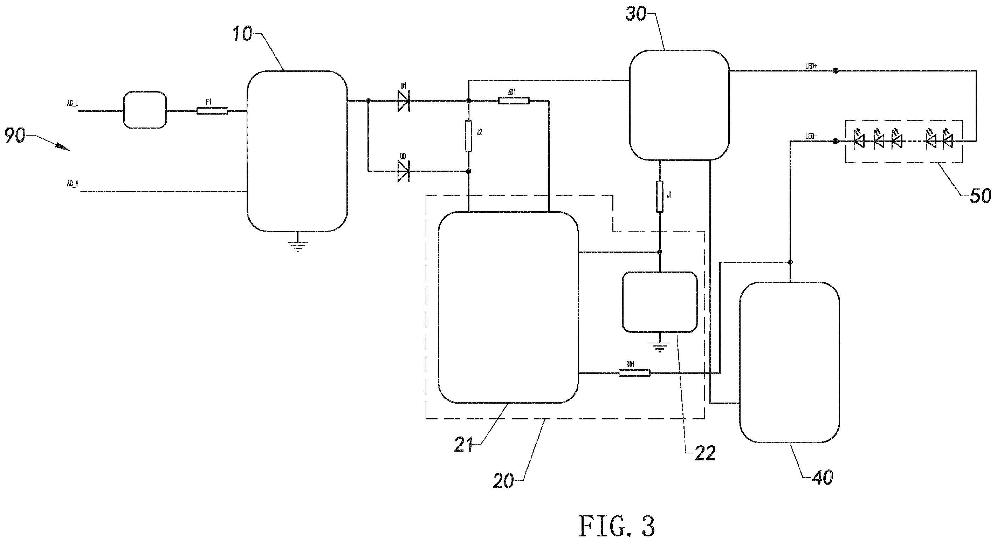

The first preferred embodiment of the present invention illustrated in Figs. 3 to 4, the linear silicon-controlled dimming driving apparatus includes a rectifier unit 10, a linear constant-current unit 20, a filter unit 30 and a strobe-removal control unit 40 arranged thereon, wherein the electric energy received from the external power supply 90 from the front end passes through the rectifier unit 10, the linear constant-current unit 20, the filter unit 30 and the strobe-removal control unit 40 to drive the output load unit 50 at the rear end, wherein the output load unit 50 is connected with a rear end of the strobe-removal control unit 40.

According to the present preferred embodiment, the output load unit 50 is implemented as a monochromatic LED light group. Specifically, the linear silicon-controlled dimming driving apparatus further includes at least one dimming switch, such as a silicon-controlled dimmer, which is placed at a front end of the rectifier unit 10. Preferably, the dimming switch, the rectifier unit 10, the linear constant-current unit 20, the filter unit 30 and the strobe-removal control unit 40 are energized and affixed to a base board.

Furthermore, the linear constant-current unit 20 further includes a main control chip 21 and a protective unit 22 arranged thereon, wherein the linear constant-current unit 20 is arranged as a main body. The linear constant-current unit 20 is connected with a rear end of the rectifier unit 10. The linear constant-current unit 20 is connected with a front end of the output load unit 50. The strobe-removal control unit 40 and the filter unit 30 are respectively connected with the linear constant-current unit 20. Specifically, the strobe-removal control unit 40 and the filter unit are also connected with the output load unit 50 for directly supplying electric energy to the output load unit 50.

It is worth mentioning that the main body here refers to the core as a functional or current controllability, and does not simply mean a large area occupying in structure or shape.

It is worth mentioning that the filter unit 30 is connected with the protective unit 22 of the linear constant-current unit 20 in a matched manner.

Specifically, the rectifier unit 10 further includes a bridge diode BD. The filter unit 30 further includes electrolytic capacitors EC1 and EC2. It is worth mentioning that those skilled in the art can understand that other required peripheral sub-circuits of the linear silicon-controlled dimming driving apparatus can be modified as required, and details are not repeated here.

More specifically, the main control chip 21 of the linear constant-current unit 20 is implemented as a high-voltage linear constant-current dimming control chip, including a high-voltage MOS tube for packaging inside thereof. The TRIAC detection port of the main control chip 21 is connected with the rear end of the rectifier unit through a current detection resistor, so that the brightness of the output load unit 50 can be adjusted by adjusting the current, wherein the protective unit 22 is connected with the filter unit 30 and is connected with the main control chip 21, the protective unit 22 is connected with the linear constant current MOS drain port in the main control chip 21 of the linear constant-current unit 20, so that the protective unit 22 is connected in series with the high-voltage MOS tube built in the main control chip 21. Therefore, the linear silicon-controlled dimming driving apparatus as a whole can resist higher surge voltage and has obvious advantages such as low cost, no EMI interference, no noise in dimming, and easy integration of optoelectronic integration.

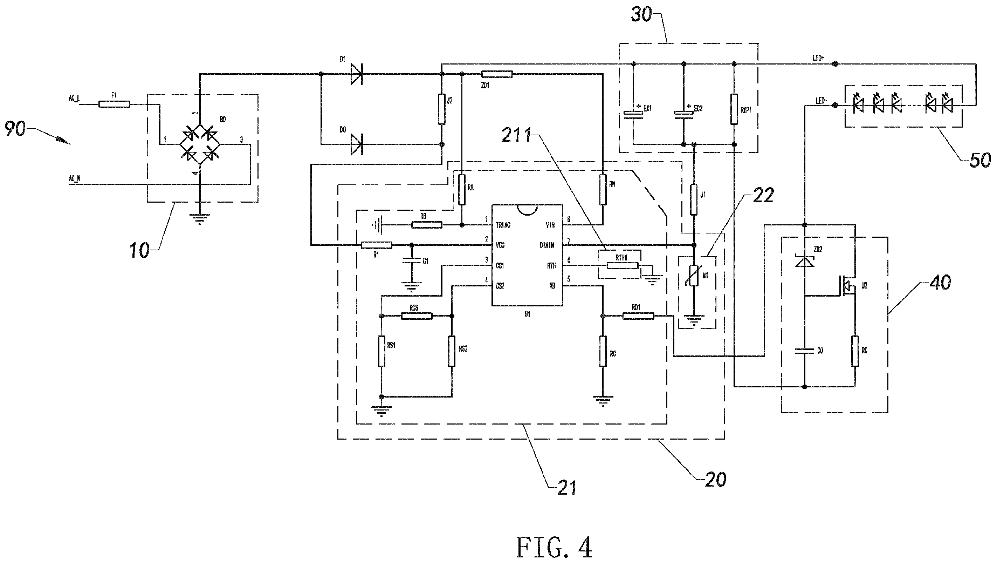

Referring to Fig. 4 , a circuit diagram according to first preferred embodiment of the present invention. The linear constant-current unit 20 is connected with the rear of the output end of the rectifier unit 10. The strobe-removal control unit 40 is connected with a pin position (e.g., pin 5) corresponding to the input voltage detection feedback end of the main control chip 21 (U1) of the linear constant-current unit 20. The filter unit 30 and the protective unit 22 of the linear constant-current unit 20 are connected with the pin position (e.g., pin 7) corresponding to the linear constant current MOS drain port inside the main control chip 21 of the linear constant-current unit 20. In other words, the linear constant-current unit 20 of the linear silicon-controlled dimming driving apparatus is arranged as the center. It is worth mentioning that the center here refers to the core as a functional or current control, and does not simply mean the center in structure or shape.

The linear constant-current unit 20 further includes an overheating protective unit 211 connected with the main control chip 21 and directly disposed on the base board, so as to feed back the temperature of the base board, to avoid the temperature of the entire linear silicon-controlled dimming driving apparatus from being too high, that is, the overheating protection function, thereby further improving the service life of the LED lamps and the linear silicon-controlled dimming driving apparatus.

Furthermore, the protective unit 22 of the linear constant-current unit 20 is connected with the pin position corresponding to the linear constant current MOS drain port inside the main control chip 21 of the linear constant-current unit 20, so that in the linear constant-current unit 20, the protective unit 22 (For example, its withstand surge voltage value is up to 2000V) and the high-voltage MOS tube above 500V/700V built in the main control chip 21 of the linear constant-current unit 20 are connected in series, that is, the value of the surge breakdown voltage of the overall apparatus is superimposed, which ensures that the overall surge withstand voltage value can reach a high voltage of more than 2500V, thereby greatly improving the surge and overvoltage resistance performance of the linear silicon-controlled dimming driving apparatus.

In addition, the output load unit 50 is connected with the output rear end of the strobe-removal control unit 40. In other words, the LED light group is located at the output end of the overall linear silicon-controlled dimming driving apparatus.

Those skilled in the art should understand that the linear silicon-controlled dimming driving apparatus defined according to the design of specific circuit-related parameters further includes required peripheral sub-circuits, such as fuse resistor F1, diode D0, D1, D2, D3, rectifier diode ZD1, ZD2, SMD resistor RCS, RS1, RS2, RA,RB, RD, overheating protection adjustment resistor RTH1, chip capacitor C0, C1, C2, jumper J1, J2, power switch tube Q1, Q2 and so on.

According to the preferred embodiment of the present invention, the protective unit 22 of the linear constant-current unit 20 includes a varistor M1, which has the functions of over-voltage protection, lightning protection, suppression of surge current, absorption of spike pulses, amplitude limiting, high-voltage arc extinguishing, noise elimination, and protection of semiconductor components.

The linear silicon-controlled dimming driving apparatus adapt to LED lamps of the preferred embodiment adopts an integral structure design, which realizes various electrical functions and improves key driving performance, such as linear adjustment rate and power conversion efficiency. The dimming driving apparatus adopts linear constant current drive mode, has good thyristor dimming compatibility and smoothness, and has a long service life. The dimming driving apparatus comprehensively carries out overall structural planning, and has the advantage of small volume, which is suitable for various application occasions and installation environments.

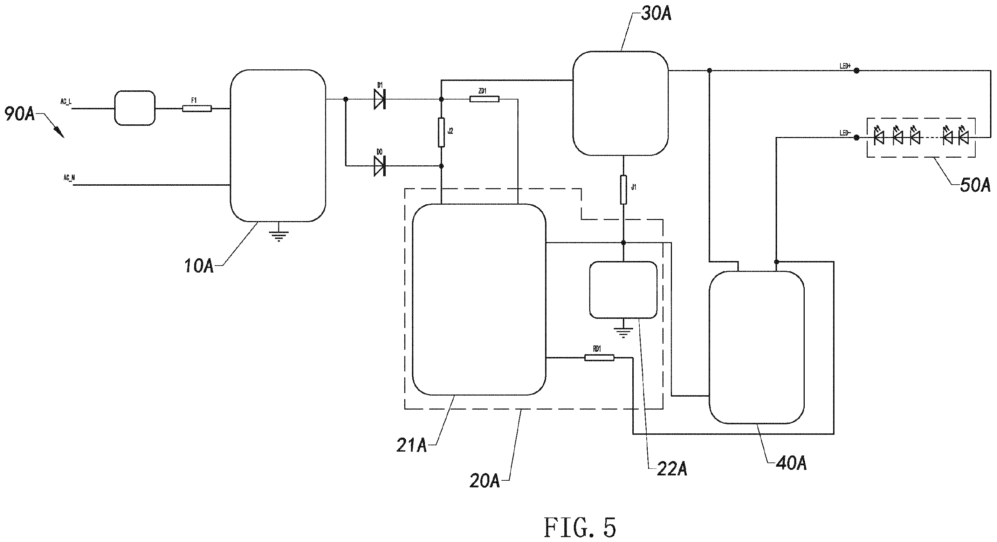

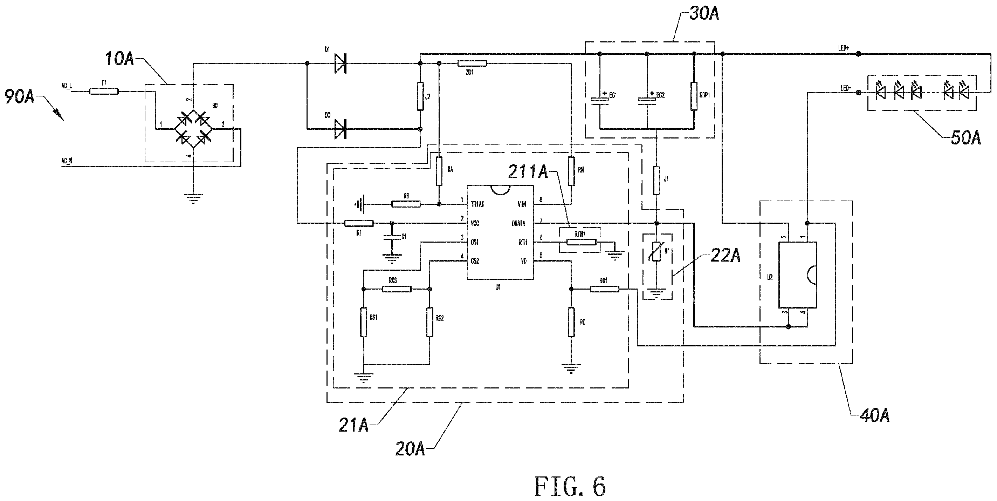

A linear silicon-controlled dimming driving apparatus according to the second preferred embodiment of the present invention is illustrated, as shown in Figs. 5 to 6, wherein the linear silicon-controlled dimming driving apparatus includes a rectifier unit 10A, a linear constant-current unit 20A, a filter unit 30A. The structure of the rectifier unit 10A, the linear constant-current unit 20A and the filter unit 30A are similar to that of the rectifier unit 10, the linear constant-current unit 20, and the filter unit 30 of the linear silicon-controlled dimming driving apparatus of the first preferred embodiment, and will not be repeated in the present invention. The LED lamps provide electric power drive with dimmable brightness, wherein the electric energy is obtained from an external power source 90A at the opposite front end and then transferred to an output load unit 50A at the opposite rear end. The external power source 90A is preferably 200-240V AC. According to the preferred embodiment, the output load unit 50A is implemented with a monochromatic LED light group.

The linear silicon-controlled dimming driving apparatus according to the present preferred embodiment further includes a strobe-removal control unit 40A, which is different from the first preferred embodiment in that the strobe-removal control unit 40A further includes a strobe-removal control chip (U2) arranged thereon. The strobe-removal control chip (U2) of the strobe-removal control unit 40A further has a soft-start function, so that the current gradually changes from a small value to a maximum value, so as to achieve a natural transition from dark to bright within a few seconds of starting the output load unit. Moreover, when an external switch is adjusted to the minimum current output gear according to the demand, the stable output of the constant current to the output load unit 50A can still be ensured, so as to ensure the smooth dimming effect of the operation process, and there will be no undesirable phenomena such as light flickering, breathing flickering or failure to start.

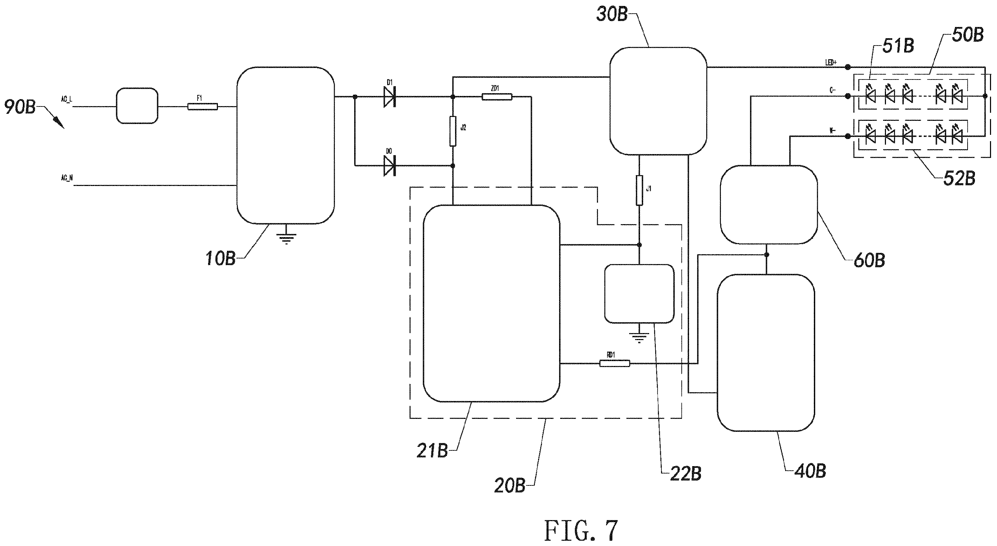

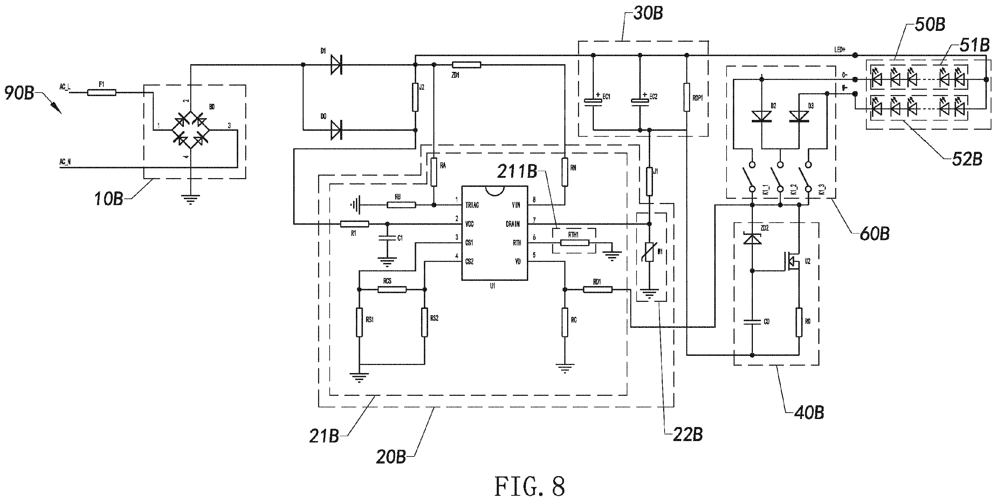

A linear silicon-controlled dimming driving apparatus according to the third preferred embodiment of the present invention is illustrated, as shown in Fig. 7 to Fig. 8, wherein the linear silicon-controlled dimming driving apparatus includes a rectifier unit 10B, a linear constant-current unit 20B, a filter unit 30B. The structure of the rectifier unit 10B, the linear constant-current unit 20B and the filter unit 30B are similar to that of the rectifier unit 10, the linear constant-current unit 20, and the filter unit 30 of the linear silicon-controlled dimming driving apparatus of the first preferred embodiment, and will not be repeated in the present invention. The LED lamps provide electric power drive with dimmable brightness, wherein the electric energy is obtained from an external power source 90B at the opposite front end and then transferred to an output load unit 50B at the opposite rear end. The external power source 90B is preferably 200-240V AC.

According to the preferred embodiment, the output load unit 50B is implemented with a multi-color LED light group. In other words, the output load unit 50B further includes a cool white temperature LED light group 51B and a warm white temperature LED light group 52B.

The linear silicon-controlled dimming driving apparatus of the preferred embodiment further includes a chromaticity switch unit 60B connected with the front end of the output load unit 50B composed of the cool white temperature LED light group 51B and the warm white temperature LED light group 52B. The chromaticity switch unit 60B is implemented as a multi-stage toggle switch or a combined DIP switch. Preferably, the chromaticity switch unit 60B is implemented as a three-position or four-position DIP switch. The output load unit 50B (for example, 1600K~3800K is warm white temperature, 4200K~8000K color temperature is cool white temperature) corresponding to each gear output end of the DIP switch is composed of two or more sets of high-voltage LED lamp bead devices with different color temperature settings, which are arranged in a certain series-parallel manner.

The specific pins of the main control chip 21B of the linear constant-current unit 20B in this preferred embodiment are shown in the following table:

| pin number | pin name | description |
|---|---|---|
| 1 | TRIAC | silicon-controlled dimmer detection |
| 2 | VCC | chip power high level input end |
| 3 | CS1 | Bleeder current sampling end |
| 4 | CS2 | LED current sampling end |
| 5 | VD | input voltage detection feedback end |
| 6 | RTH | chip over temperature adjustment point setting |
| 7 | DRAIN | the internal linear constant current MOS drain of the chip |
| 8 | VIN | chip high voltage power supply input end |

The linear silicon-controlled dimming driving apparatus can take into account the performance of linear adjustment rate, surge and overvoltage protection, short-circuit protection and other aspects without adding additional electronic components. The linear silicon-controlled dimming driving apparatus is suitable for the driving requirements of multi-chromaticity dimming, has practicality for the dimming requirements of cool white temperature LEDs and warm white temperature LEDs, and can achieve the actual effect of eliminating stroboscopic and low ripple. The linear silicon-controlled dimming driving apparatus uses a small number of electronic components to ensure that the manufacturing cost is not increased.

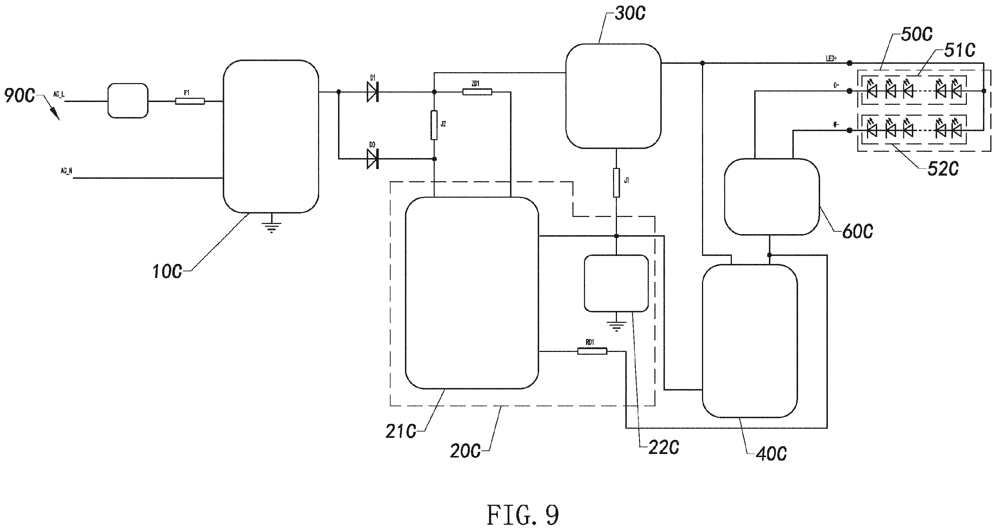

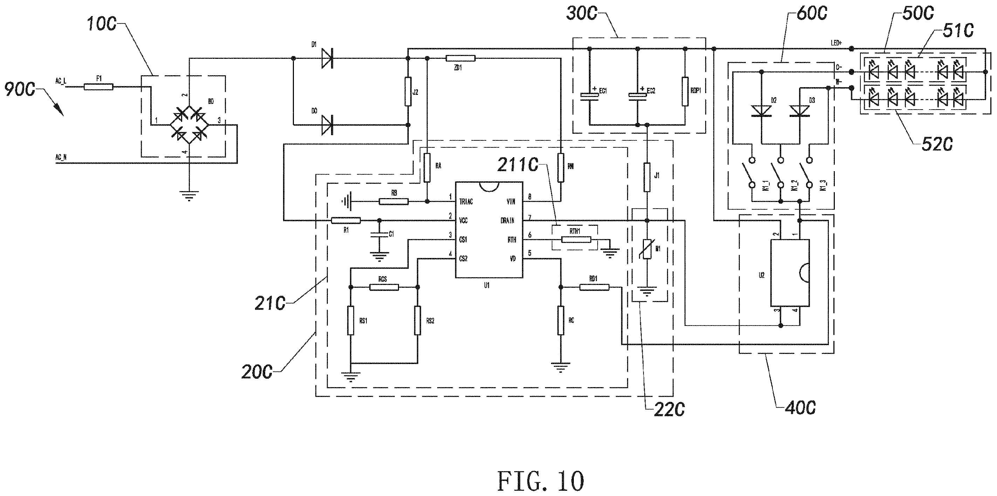

A linear silicon-controlled dimming driving apparatus according to the fourth preferred embodiment of the present invention is illustrated, as shown in Figs. 9 to 10, wherein the linear silicon-controlled dimming driving apparatus includes a rectifier unit 10C, a linear constant-current unit 20C, a filter unit 30C. The structure of the rectifier unit 10C, the linear constant-current unit 20C and the filter unit 30C are similar to that of the rectifier unit 10B, the linear constant-current unit 20B, and the filter unit 30B of the linear silicon-controlled dimming driving apparatus of the third preferred embodiment, and will not be repeated in the present invention. The LED lamps provide electric power drive with dimmable brightness, wherein the electric energy is obtained from an external power source 90C at the opposite front end and then transferred to an output load unit 50C at the opposite rear end. The external power source 90C is preferably 200-240V AC. According to the preferred embodiment, the output load unit 50C is implemented with a multi-color LED light group. In other words, the output load unit 50C further includes a cool white temperature LED light group 51C and a warm white temperature LED light group 52C (for example, 1800K~4000K is a warm white temperature, and a color temperature of 4500K~8000K is a cool white temperature).

The linear silicon-controlled dimming driving apparatus according to the present preferred embodiment further includes a strobe-removal control unit 40C, which is different from the third preferred embodiment in that the strobe-removal control unit 40C further includes a strobe-removal control chip (U2) arranged thereon. The strobe-removal control chip (U2) of the strobe-removal control unit 40C further has a soft-start function, so that the current gradually changes from a small value to a maximum value, so as to achieve a natural transition from dark to bright within a few seconds of starting the output load unit.

The specific identification of the linear silicon-controlled dimming driving apparatus according to the preferred embodiment is: fuse resistor F1, bridge diode BD, high-voltage linear constant-current control chip U1, strobe-removal control chip U2, diode D0, D1, D2, D3, rectifier diode ZD1, ZD2, SMD resistor RCS, RS1, RS2, RA, RB, RD, overheating protection adjustment resistor RTH1, SMD capacitor C0, C1, C2, varistor M1, jumper J1, J2, electrolytic capacitor EC1, EC2, DIP switch K1, power switch tube Q1, Q2.

One skilled in the art will understand that the embodiment of the present invention as shown in the drawings and described above is exemplary only and not intended to be limiting. It will thus be seen that the objects of the present invention have been fully and effectively accomplished. The embodiments have been shown and described for the purposes of illustrating the functional and structural principles of the present invention and is subject to change without departure from such principles.

## Claims

1. A linear silicon-controlled dimming driving apparatus of a LED lamp, comprising:
a rectifier unit (10, 10A, 10B, 10C), a linear constant-current unit (20, 20A, 20B, 20C), a filter unit (30, 30A, 30B, 30C) and a strobe-removal control unit (40, 40A, 40C) arranged thereon, wherein an output load unit (50, 50A, 50B, 50C) is connected with a front end to said linear constant-current unit (20, 20A, 20B, 20C), wherein electric energy from an external power source (90, 90A, 90B, 90C) received at a front end passes through said rectifier unit (10, 10A, 10B, 10C), said linear constant-current unit (20, 20A, 20B, 20C), said filter unit (30, 30A, 30B, 30C) and said strobe-removal control unit (40, 40A, 40C) to drive the output load connected with the front end to said linear constant-current unit (20, 20A, 20B, 20C) and with a rear end of the strobe-removal control unit (40, 40A, 40C), wherein said linear constant-current unit (20, 20A, 20B, 20C) further comprises a main control chip (21, 21B) arranged thereon, wherein said linear constant-current unit (20, 20A, 20B, 20C) is connected with a rear end of said rectifier unit (10, 10A, 10B, 10C), wherein said strobe-removal control unit (40, 40A, 40C) and said filter unit (30, 30A, 30B, 30C) are respectively connected with said linear constant-current unit (20, 20A, 20B, 20C) via a pin (pin 7) corresponding to a linear constant current MOS drain inside said main control chip (31), wherein said output load unit (50, 50A, 50B, 50C) is implemented as an LED light group composed of a plurality of LEDs of the LED lamp,
wherein said main control chip (21, 21B) is a high-voltage linear constant-current dimming control chip (U1) whose internal package has a built-in high-voltage MOS tube, wherein a TRIAC detection port of said main control chip (21, 21B) is connected with said rear end of said rectifier unit (10, 10A, 10B, 10C) through a current detection resistor, wherein the brightness of said output load unit (50, 50A, 50B, 50C) is adjusted through adjusting a current,
**characterised in that**
said linear constant-current unit (20, 20A, 20B, 20C) further comprises a protective unit (22) arranged thereon, wherein said protective unit (22) is connected with said filter unit (30, 30A, 30B, 30C) and both are connected with said main control chip (21, 21B) via said pin of said linear constant MOS drain of said main control chip (21, 21B) of said linear constant-current unit (20, 20A, 20B, 20C), wherein said protective unit (22) comprises a varistor (M1) which is connected with a linear constant current MOS drain port of said main control chip (21, 21B) of said linear constant-current unit (20, 20A, 20B, 20C), so as to be connected in series with said built-in high-voltage MOS tube of said main control chip (21, 21B).

2. The linear silicon-controlled dimming driving apparatus, as recited in claim 1, wherein said strobe-removal control unit (40, 40A, 40C) further comprises a strobe-removal control chip (U2) arranged thereon, wherein said strobe-removal control chip (U2) of said strobe-removal control unit (40, 40A, 40C) further has a soft-start function, so that the current gradually changes from a small value to a maximum value, so as to achieve a natural transition from dark to bright within a few seconds of starting said output load unit (50, 50A, 50B, 50C).

3. The linear silicon-controlled dimming driving apparatus, as recited in claim 1, wherein said rectifier unit (10, 10A, 10B, 10C) further comprises a bridge diode (BD) arranged thereon, wherein said filter unit (30, 30A, 30B, 30C) further comprises at least one electrolytic capacitor (EC1, EC2) arranged thereon.

4. The linear silicon-controlled dimming driving apparatus, as recited in claim 1, wherein said linear constant-current unit (20, 20A, 20B, 20C) further comprises an overheating protective unit (211) connected with said main control chip (21, 21B), and is directly arranged on a base board for feedback on the temperature of said base board.

5. The linear silicon-controlled dimming driving apparatus, as recited in claim 1, wherein said output load unit (50, 50A, 50B, 50C) is composed of an LED light group composed of cool white temperature LEDs and warm white temperature LEDs.

6. The linear silicon-controlled dimming driving apparatus, as recited in claim 5, wherein said linear silicon-controlled dimming driving apparatus further comprises a chromaticity switch unit (60B) connected with a front end of said LED light group.

7. The linear silicon-controlled dimming driving apparatus, as recited in claim 6, wherein said chromaticity switch unit (60B) is implemented as a multi-stage toggle switch or as a combined DIP switch.

## Patentansprüche

1. AA Lineare, siliziumgesteuerte Dimmvorrichtung für eine LED -Lampe, umfassend:
Eine Gleichrichtereinheit (10, 10A, 10B, 10C) , eine lineare Konstantstromeinheit (20, 20A, 20B, 20C) , eine Filtereinheit (30, 30A, 30B, 30C) und eine darauf angeordnete Stroboskop-Unterdrückungseinheit (40, 40A, 40C) sind vorhanden. Eine Ausgangslasteinheit (50, 50A, 50B, 50C) ist an der Vorderseite der linearen Konstantstromeinheit (20, 20A, 20B, 20C) angeschlossen . Die elektrische Energie wird von einer externen Stromquelle (90, 90A, 90B, 90C) an der Vorderseite der Einheit eingespeist. Der Strom durchläuft die Gleichrichtereinheit (10, 10A, 10B, 10C) , die lineare Konstantstromeinheit (20, 20A, 20B, 20C) , die Filtereinheit (30, 30A, 30B, 30C) und die Stroboskop-Unterdrückungs-Steuereinheit (40, 40A, 40C), um die Ausgangslast anzusteuern, die mit dem Eingang der linearen Konstantstromeinheit (20, 20A, 20B, 20C) und mit dem hinteren Ende der Stroboskop-Unterdrückungs-Steuereinheit (40, 40A, 40C) verbunden ist. Die lineare Konstantstromeinheit (20, 20A , 20B, 20C) umfasst zudem einen darauf angeordneten Hauptsteuerchip ( 21, 21B) . ein hinteres Ende der Gleichrichtereinheit (10, 10A, 10B, 10C) , wobei die Stroboskop-Entfernungssteuereinheit (40, 40A, 40C) und die Filtereinheit (30, 30A, 30B, 30C) jeweils über einen Pin (Pin 7), der einem linearen Konstantstrom-MOS-Drain innerhalb des Hauptsteuerchips (31) entspricht, mit der linearen Konstantstromeinheit (20, 20A, 20B, 20C) verbunden sind, wobei die Ausgangslasteinheit (50, 50A, 50B, 50C) als LED-Lichtgruppe aus mehreren LEDs der LED-Lampe realisiert ist.
wobei der Hauptsteuerchip (21, 21B) ein linearer Hochspannungs-Konstantstrom-Dimmsteuerchip (U1) ist , dessen internes Gehäuse einen eingebauten Hochspannungs-MOSFET enthält, wobei ein TRIAC-Erkennungsanschluss des Hauptsteuerchips (21, 21B) über einen Stromerkennungswiderstand mit dem hinteren Ende der Gleichrichtereinheit (10, 10A, 10B, 10C) verbunden ist, wobei die Helligkeit der Ausgangslasteinheit (50, 50A, 50B, 50C) durch Anpassen eines Stroms eingestellt wird.
**gekennzeichnet durch**
Die lineare Konstantstromeinheit (20, 20A, 20B, 20C) umfasst ferner eine darauf angeordnete Schutzeinheit (22), wobei die Schutzeinheit (22) mit der Filtereinheit (30, 30A, 30B, 30C) verbunden ist und beide über den Pin des Drain-Anschlusses des linearen Konstantstrom -MOSFETs des Hauptsteuerchips (21, 21B) der linearen Konstantstromeinheit (20, 20A, 20B, 20C) mit diesem verbunden sind. Die Schutzeinheit (22) umfasst einen Varistor (M1), der mit einem Drain-Anschluss des linearen Konstantstrom-MOSFETs des Hauptsteuerchips (21, 21B ) der linearen Konstantstromeinheit ( 20, 20A, 20B, 20C) verbunden ist und somit in Reihe mit dem eingebauten Hochspannungs-MOSFET des Hauptsteuerchips (21, 21B) geschaltet ist. Die

2. Die lineare, siliziumgesteuerte Dimm-Ansteuervorrichtung nach Anspruch 1, wobei die Stroboskop-Unterdrückungssteuereinheit (40, 40A, 40C) ferner einen darauf angeordneten Stroboskop-Unterdrückungs-Steuerchip (U2) umfasst , wobei der Stroboskop-Unterdrückungs-Steuerchip (U2) der Stroboskop-Unterdrückungssteuereinheit (40, 40A, 40C) ferner eine Sanftanlauffunktion aufweist, sodass der Strom allmählich von einem kleinen Wert auf einen Maximalwert ansteigt, um innerhalb weniger Sekunden nach dem Einschalten der Ausgangslasteinheit (50, 50A, 50B, 50C) einen natürlichen Übergang von dunkel zu hell zu erreichen .

3. Die lineare, siliziumgesteuerte Dimm-Ansteuervorrichtung nach Anspruch 1, wobei die Gleichrichtereinheit (10, 10A, 10B, 10C) ferner eine darauf angeordnete Brückendiode (BD) umfasst und die Filtereinheit (30, 30A, 30B, 30C) ferner mindestens einen darauf angeordneten Elektrolytkondensator (EC1, EC2) umfasst .

4. Die lineare, siliziumgesteuerte Dimm-Ansteuervorrichtung nach Anspruch 1, wobei die lineare Konstantstromeinheit (20, 20A, 20B, 20C) ferner eine Überhitzungsschutzeinheit (211) umfasst , die mit dem Hauptsteuerchip (21, 21B) verbunden ist und direkt auf einer Grundplatine angeordnet ist, um eine Rückmeldung über die Temperatur der Grundplatine zu erhalten.

5. Die lineare, siliziumgesteuerte Dimm-Ansteuervorrichtung nach Anspruch 1 , wobei die Ausgangslasteinheit (50, 50A, 50B, 50C ) Besteht aus einer LED-Lichtgruppe, die aus kaltweißen und warmweißen LEDs besteht.

6. Die lineare, siliziumgesteuerte Dimm-Ansteuervorrichtung nach Anspruch 5 , wobei die lineare, siliziumgesteuerte Dimm-Ansteuervorrichtung ferner eine Farbumschalteinheit (60B) umfasst , die mit dem vorderen Ende der LED-Lichtgruppe verbunden ist.

7. Die lineare, siliziumgesteuerte Dimmtreibervorrichtung nach Anspruch 6 , wobei die Farbumschalteinheit (60B) als mehrstufiger Kippschalter oder als kombinierter DIP-Schalter ausgeführt ist .

## Revendications

1. AA Dispositif de commande de gradation linéaire à silicium d' une lampe LED, comprenant :
un redresseur (10, 10A, 10B, 10C) , un convertisseur linéaire à courant constant (20, 20A, 20B, 20C) , un filtre (30, 30A, 30B, 30C) et un dispositif de suppression des interférences (40, 40A, 40C) sont disposés sur ce dispositif. Une charge de sortie (50, 50A, 50B, 50C) est connectée en entré e au convertisseur linéaire à courant constant (20, 20A, 20B, 20C). L'énergie électrique provenant d'une source d'alimentation externe (90, 90A, 90B, 90C) est reçue en entrée. Le courant traverse l'unité de redressement (10, 10A, 10B, 10C) , l'unité de courant constant linéaire (20, 20A, 20B, 20C) , l'unité de filtrage (30, 30A, 30B, 30C) et l'unité de commande de suppression des interférences (40, 40A, 40C) pour alimenter la charge de sortie connectée à l'entrée de l' unité de courant constant linéaire (20, 20A, 20B, 20C) et à l'arrière de l' unité de commande de suppression des interférences (40, 40A, 40C) . L' unité de courant constant linéaire ( 20, 20A, 20B, 20C) comprend en outre une puce de commande principale (21, 21B) intégrée. ladite unité de redressement (10, 10A, 10B, 10C) , dans laquelle ladite unité de commande de suppression du stroboscope (40, 40A, 40C) et ladite unité de filtrage (30, 30A, 30B, 30C) sont respectivement connectées à ladite unité de courant constant linéaire (20, 20A, 20B, 20C) via une broche (broche 7) correspondant à un drain MOS à courant constant linéaire à l'intérieur de ladite puce de commande principale (31), dans laquelle ladite unité de charge de sortie (50, 50A, 50B, 50C) est réalisée sous la forme d'un groupe lumineux LED composé d'une pluralité de LED de la lampe LED,
dans lequel ladite puce de commande principale (21, 21B) est une puce de commande de gradation à courant constant linéaire haute tension (U1) dont le boîtier interne comporte un tube MOS haute tension intégré, dans lequel un port de détection TRIAC de ladite puce de commande principale (21, 21B) est connecté à ladite extrémité arrière de ladite unité de redressement (10, 10A, 10B, 10C) par l'intermédiaire d'une résistance de détection de courant, dans lequel la luminosité de ladite unité de charge de sortie (50, 50A, 50B, 50C) est ajustée en ajustant un courant,
**caractérisé en ce que**
L' unité de courant constant linéaire (20, 20A, 20B, 20C) comprend en outre une unité de protection (22) disposée sur celle-ci. Cette unité de protection (22) est connectée à l'unité de filtrage (30, 30A, 30B, 30C) , et les deux sont connectées à la puce de commande principale (21, 21B) via la broche de drain du transistor MOS à courant constant linéaire de ladite puce de commande principale (21, 21B) de l' unité de courant constant linéaire (20, 20A, 20B, 20C). L'unité de protection (22) comprend une varistance (M1) connectée au port de drain du transistor MOS à courant constant linéaire de ladite puce de commande principale (21, 21B) de l'unité de courant constant linéaire (20, 20A, 20B, 20C) , de manière à être connectée en série avec le transistor MOS haute tension intégré de ladite puce de commande principale (21). 21B).

2. L'appareil de commande de gradation linéaire à silicium, tel que décrit dans la revendication 1, dans lequel ladite unité de commande de suppression de stroboscope (40, 40A, 40C) comprend en outre une puce de commande de suppression de stroboscope (U2) disposée dessus, dans laquelle ladite puce de commande de suppression de stroboscope (U2) de ladite unité de commande de suppression de stroboscope (40, 40A, 40C) possède en outre une fonction de démarrage progressif, de sorte que le courant passe progressivement d'une petite valeur à une valeur maximale, afin de réaliser une transition naturelle de l'obscurité à la lumière en quelques secondes après le démarrage de ladite unité de charge de sortie (50, 50A, 50B, 50C) .

3. L'appareil de commande de gradation linéaire à commande au silicium, tel que décrit dans la revendication 1, dans lequel ladite unité de redressement (10, 10A, 10B, 10C) comprend en outre une diode de pont (BD) disposée dessus, dans lequel ladite unité de filtrage (30, 30A, 30B, 30C) comprend en outre au moins un condensateur électrolytique (EC1, EC2) disposé dessus.

4. L'appareil de commande de gradation linéaire à silicium, tel que décrit dans la revendication 1, dans lequel ladite unité de courant constant linéaire (20, 20A, 20B, 20C) comprend en outre une unité de protection contre la surchauffe (211) connectée à ladite puce de commande principale (21, 21B) et est directement disposée sur une carte de base pour le retour d'information sur la température de ladite carte de base.

5. L'appareil de commande de gradation linéaire à silicium, tel que décrit dans la revendication 1 , dans lequel ladite unité de charge de sortie (50, 50A, 50B, 50C ) est composé d' un groupe de LED comprenant des LED à température de couleur blanc froid et des LED à température de couleur blanc chaud.

6. L'appareil de commande de gradation linéaire à commande au silicium, tel que décrit dans la revendication 5 , dans lequel ledit appareil de commande de gradation linéaire à commande au silicium comprend en outre une unité de commutation de chromaticité (60B) connectée à une extrémité avant dudit groupe de lumière LED.

7. L'appareil de commande de gradation linéaire à silicium, tel que décrit dans la revendication 6 , dans lequel ladite unité de commutation de chromaticité (60B) est mise en œuvre sous la forme d'un commutateur à bascule à plusieurs étages ou sous la forme d'un commutateur DIP combiné .
